(19)

**Europäisches Patentamt**
**European Patent Office**
**Office européen des brevets**

(11)  **EP 4 726 444 A1**

(12)  # EUROPEAN PATENT APPLICATION

(43) Date of publication:
**15.04.2026   Bulletin 2026/16**

(21) Application number: **25202879.0**

(22) Date of filing: **17.09.2025**

(51) International Patent Classification (IPC):
***G02B 6/12*** *(2006.01)*

(52) Cooperative Patent Classification (CPC):
**G02B 6/12002; G02B 6/125**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **18.09.2024   GB 202413729**

(71) Applicant: **QuiX Quantum BV
7521 AN Enschede (NL)**

(72) Inventors:
• **VLEESHOUWERS, Ward Lucas
7521 AN Enschede (NL)**
• **STEPHENS, Emlyn Arturo
7521 AN Enschede (NL)**

(74) Representative: **CMS Cameron McKenna Nabarro
Olswang LLP
Cannon Place
78 Cannon Street
London EC4N 6AF (GB)**

(54)  **IMPROVED OPTICAL ROUTING AND NETWORKING USING MULTI-LAYER OPTICAL CIRCUITS**

(57)      An optical circuit is defined. The optical circuit comprises a first substrate forming a first layer of the optical circuit, wherein a first plurality of waveguides are formed on the first layer; and a second substrate forming a second layer of the optical circuit, wherein a second plurality of waveguides are formed on the second layer; wherein the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a banyan-type network.

FIG. 3

**Description**

Background

Banyan-type networks otherwise known as banyan-type circuits include banyan networks/circuits, baseline networks/circuits, butterfly networks/circuits, and/or omega networks/circuits. In particular, as the banyan network is topologically equivalent to the butterfly network, baseline network, or omega network, and their inverses, these can all be considered to be banyan-type networks. Banyan-type networks/circuits provide convenient N to N routing and can be used to implement Fourier transforms. In addition, banyan-type networks can be used to implement Benes networks/switches which provide general optical switching. Banyan-type networks can be used for more general interferometric purposes, including, for example, a sine-cosine fractal architecture. However, the formation of such banyan-type networks in optical circuits can be challenging due to the need for waveguides to cross-over each other within a single layer of an optical circuit in order to achieve the necessary connectivity. These crossovers can be challenging to implement due to the non-negligible crosstalk and losses that occur when waveguides on a same layer crossover. The present application describes a way to implement banyan-type networks and Benes circuits/switches without having waveguides on a single layer crossover each other.

The embodiments described below are not limited to implementations which solve any or all of the disadvantages of known optical circuits implementing banyan-type and Benes networks.

Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A first aspect provides an optical circuit comprising a first substrate forming a first layer of the optical circuit, wherein a first plurality of waveguides are formed on the first layer; and a second substrate forming a second layer of the optical circuit, wherein a second plurality of waveguides are formed on the second layer. The first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a banyan-type network. Thus, an aspect provides an optical circuit that implements a banyan-type network over two layers. This enables the banyan-type network to be implemented without intra-layer or within layer crossovers of waveguides. Such intra-layer or within layer crossovers can lead to large crosstalk making them undesirable.

In some examples, the first plurality of waveguides on the first layer are formed to remain in a same order throughout the banyan-type network such that no waveguide of the first plurality of waveguides crosses another waveguide of the first plurality of waveguides; and the second plurality of waveguides on the second layer are formed to remain in a same order throughout the banyan-type network such that no waveguide of the second plurality of waveguides crosses another waveguide of the second plurality of waveguides. Thus, there are no intra-layer or within layer crossovers in the banyan-type network reducing the losses associated with such crossovers.

In some examples, all active optical elements are on the first layer of the optical circuit. In other examples, all active optical elements are on the second layer of the optical circuit. Active optical elements can be taken to be components of an optical circuit that one requires control over for the proper and complete operation of the circuit, including (but not limited to) phase shifters. Having all active optical elements on a single layer of the optical circuit reduces difficulties that can come when forming active optical elements in multiple layers.

In some examples, a first at least one waveguide of the first plurality of waveguides on the first layer is formed to: interface with a second at least one waveguide of the second plurality of waveguides on the second layer at a first interaction stage; displace laterally with respect to the second at least one waveguide of the second plurality of waveguides to align with a third at least one waveguide of the second plurality of waveguides; and interface with the third at least one waveguide of the second plurality of waveguides on the second layer at a second interaction stage. In other words one or more waveguides on the first layer may displace laterally with respect to waveguides on the second layer without interacting with the waveguides in the second layer. This enables a waveguide on the first layer to interact with different waveguides in the second layer at different interaction stages.

In some examples a total number of waveguides in the first plurality of waveguides and the second plurality of waveguides combined is N wherein N is of the form $N=2^n$ and n is a positive integer greater than or equal to 2, and wherein the waveguides are numbered from 1 to N; the first plurality of waveguides are numbered from 1 to N/2; the second plurality of waveguides are numbered from N/2+1 to N; and the first plurality of waveguides on the first layer and the second plurality of waveguides on the second layer being formed such that at least some of the first plurality of waveguides on the first layer interface with at least some of the second plurality of waveguides on the second layer in a plurality of interaction stages in order to implement a banyan-type network comprises the first plurality of waveguides and the second plurality of waveguides being formed such that: at a first interaction stage a waveguide numbered i from the first plurality of waveguides is formed to interface with a waveguide numbered N/2+i from the second plurality of waveguides, wherein the interfacing is between layer and wherein i is from 1 to N/2; at a first substage of each interaction stage given by k, wherein k is from 2 to n in increments of 1, waveguides numbered i+r are formed to interface with waveguides numbered $(i + r + \frac{N}{2} + 2^{k-2}) \bmod N$ wherein i is given by i=1+d×2^{k-1} wherein d is from 0 to $\frac{N}{2^k} - 1$ in increments of 1 and r is from 0 to 2^{k-2} - 1 in increments of 1; and at a second substage of interaction stage given by k, waveguides numbered i+r are formed to interface with waveguides numbered $(i + r + \frac{N}{2} + 2^{k-2}) \bmod N$ wherein i is given by $i = 1 + d \times 2^{k-1}$ wherein d is from $\frac{N}{2^k}$ to $\frac{N}{2^{k-1}} - 1$ in increments of 1 and r is from 0 to 2^{k-2} - 1 in increments of 1. Thus, a banyan-type network with the necessary interactions can be implemented using the specific set of interfaces/interactions described above.

In some examples at the first interaction stage a waveguide numbered i from the first plurality of waveguides is formed on the first layer adjacent to a waveguide numbered N/2+i from the second plurality of waveguides on the second layer wherein i is from 1 to N/2; and for each interaction stage given by k, wherein k is from 2 to n, a relative alignment of the first plurality of waveguides and the second plurality of waveguides is displaced laterally from a relative alignment of the first plurality of waveguides and the second plurality of waveguides in the first interaction stage by 2^{k-2} such that: at the first substage of each of the interaction stages given by k the ith waveguide of the first plurality of waveguides is formed on the first layer to be adjacent to a waveguide numbered N/2+2^{k-2}+i of the second plurality of waveguides on the second layer, wherein i is from 1 to N/2-2^{k-2}, wherein k is from 2 to n in increments of 1; and at the second substage of each of the interactions stages given by k the ith waveguide of the first plurality of waveguides is formed on the first layer to be adjacent to a waveguide numbered N/2-2^{k-2}+i of the second plurality of waveguides on the second layer, wherein i is from 1+2^{k-2} to N/2, wherein k is from 2 to n in increments of 1. Hence, the horizontal shifting of the waveguides enables the implementation of a banyan-type network by aligning the waveguides to implement the interfaces/interfaces described above.

In some examples, n is 3 or greater and either: at the 2nd interaction stage the first substage is performed before the second substage and in subsequent interaction stages an order of implementing the substages alternates between performing the second substage before the first substage and performing the first substage before the second substage; or in at the 2nd interaction stage the second substage is performed before the first substage and in subsequent interaction stage an order of implementing the substages alternates between performing the first substage before the second substage and performing the second substage before the first substage. This reduces the amount of lateral displacement required to implement the interaction stages by having shifts in the same direction follow each other.

In some examples, the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a Benes network by: the first plurality of waveguides and the second plurality of waveguides being formed in accordance with the 1st to nth interaction stages of the banyan-type network as defined above; and the first plurality of waveguides and the second plurality of waveguides then being formed such that: at a first substage of each interaction stage given by j, wherein j is from n+1 to 2n-2 in increments of 1, waveguides numbered i+r are formed to interface with waveguides numbered $(i + r + \frac{N}{2} + 2^{2n-j-2}) \bmod N$ wherein i is given by i=1+d×2^{2n-j-1} wherein d is from 0 to $\frac{N}{2^{2n-j}} - 1$ in increments of 1 and r is from 0 to 2^{2n-j-2} - 1 in increments of 1; and at a second substage of each interaction stage given by j, waveguides numbered i+r are formed to interface with waveguides numbered $(i + r + \frac{N}{2} + 2^{2n-j-2}) \bmod N$ wherein i is given by i = 1 + d × 2^{2n-j-1} wherein d is from $\frac{N}{2^{2n-j}}$ to $\frac{N}{2^{2n-j-1}} - 1$ in increments of 1 and r is from 0 to 2^{2n-j-2} - 1 in increments of 1; and at a 2n-1th interaction stage a waveguide numbered i from the first plurality of waveguides is formed to interface with a waveguide numbered N/2+i from the second plurality of waveguides, wherein the interfacing is between layers of the optical circuit and wherein i is from 1 to N/2 in unit increments. Thus, the optical circuit can be used as part of a Benes network as well as a banyan-type network by implementing these interactions after implementing the interactions of the banyan-type network.

In some examples, at each interaction stage given by j, wherein j is from n+1 to 2n-2, a relative alignment of the first plurality of waveguides and the second plurality of waveguides is displaced laterally from a relative alignment of the first plurality of waveguides and the second plurality of waveguides in the first interaction stage by 2^{2n-j-2} such that: at a first substage of each interaction stage given by j the ith waveguide of the first plurality of waveguides is formed on the first layer to be adjacent to a waveguide numbered N/2+2^{2n-j-2}+i of the second plurality of waveguides on the second layer, wherein i is from 1 to $N/2-2^{2n-j-2}$; at a second substage of each interaction stage given by j the ith waveguide of the first plurality of waveguides is formed on the first layer to be adjacent to a waveguide numbered $N/2-2^{2n-j-2}+i$ of the second plurality of waveguides on the second layer, wherein i is from $1+2^{2n-j-2}$ to N/2. Hence, the horizontal shifting of the waveguides enables the implementation of a Benes network by aligning the waveguides.

In some examples, n is 3 or greater and: at the nth or n+1th interaction stage the first substage is performed before the second substage and in subsequent interaction stages an order of implementing the substages alternates between performing the second substage before the first substage and performing the first substage before the second substage; or at the nth or n+1th interaction stage the second substage is performed before the first substage and in subsequent interaction stage an order of implementing the substages alternates between performing the first substage before the second substage and performing the second substage before the first substage. This reduces the amount of lateral displacement required to implement the interaction stages by having shifts in the same direction follow each other.

In some examples, a total number of waveguides in the first plurality of waveguides and the second plurality of waveguides combined is N wherein N is of the form $N=2^n$ and n is a positive integer greater than or equal to 2, and wherein the waveguides are numbered from 1 to N; the first plurality of waveguides are numbered from 1 to N/2; the second plurality of waveguides are numbered from N/2+1 to N; and the first plurality of waveguides on the first layer and the second plurality of waveguides on the second layer being formed such that at least some of the first plurality of waveguides on the first layer interface with at least some of the second plurality of waveguides on the second layer in a plurality of interaction stages in order to implement a banyan-type network comprises the first plurality of waveguides and the second plurality of waveguides being formed such that: at a first interaction stage a waveguide numbered i wherein i is from 1 to N-1 in units of 2 is formed to interface with a waveguide numbered i+1 wherein the interfacing is within a layer; at a second interaction stage a waveguide numbered i from the first plurality of waveguides wherein i is from 1 to N/2 in units of 1 is formed to interface with a waveguide numbered N/2+i from the second plurality of waveguides, wherein the interfacing is between layers; and if n is 3 or greater then at a first substage of each interaction stage given by k, wherein k is from 3 to n in increments of 1, waveguides numbered i+r are formed to interface with waveguides numbered $(i + r + \frac{N}{2} + 2^{k-2})\bmod N$ wherein i is given by $i=1+d\times 2^{k-1}$ wherein d is from 0 to $\frac{N}{2^k} - 1$ in increments of 1 and r is from 0 to $2^{k-2} - 1$ in increments of 1; and at a second substage of each of interaction stage given by k, waveguides numbered i+r are formed to interface with waveguides numbered

$(i + r + \frac{N}{2} + 2^{2n-j-2})\bmod N$ wherein i is given by i $= 1 + d \times 2^{2n-j-1}$ wherein d is from $\frac{N}{2^{2n-j}}$ to $\frac{N}{2^{2n-j-1}} - 1$ in increments of 1 and r is from 0 to $2^{2n-j-2} - 1$ in increments of 1. This provides an alternative implementation of a banyan-type network.

In some examples, n is 3 or greater and for each interaction stage given by k, wherein k is from 3 to n, either the first plurality of waveguides and/or the second plurality of waveguides are formed to displace laterally from the position of the waveguides in the first interaction stage by $2^{k-2}$ such that: at the first substage of each interaction stage given by k the ith waveguide of the first plurality of waveguides is formed on the first layer to be adjacent to a waveguide numbered $N/2+2^{k-2}+i$ of the second plurality of waveguides on the second layer, wherein i is from 1 to $N/2-2^{k-2}$; and at the second substage of each interaction stage given by k the ith waveguide of the first plurality of waveguides is formed on the first layer to be adjacent to a waveguide numbered $N/2-2^{k-2}+i$ of the second plurality of waveguides on the second layer, wherein i is from $1+2^{k-2}$ to N/2. Hence, the horizontal shifting of the waveguides enables the implementation of a banyan-type network by aligning waveguides.

In some examples, n is 4 or greater and either: at the 3nd interaction stage the first substage is performed before the second substage and in subsequent interaction stages an order of implementing the substages alternates between performing the second substage before the first substage and performing the first substage before the second substage; or at the 3nd interaction stage the second substage is performed before the first substage and in subsequent interaction stage an order of implementing the substages alternates between performing the first substage before the second substage and performing the second substage before the first substage. This reduces the amount of lateral displacement required to implement the interaction stages by having shifts in the same direction follow each other.

In some examples the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a Benes network by: the first plurality of waveguides and the second plurality of waveguides being formed in accordance with the 1st to nth interaction stages of the banyan-type network as defined above; and the first plurality of waveguides and the second plurality of waveguides then being formed such that: at a (2n-2)th interaction stage a waveguide numbered i from the first plurality of waveguides is formed to interface with the waveguide numbered N/2+i from the second plurality of waveguides, wherein the interfacing is between layers of the optical circuit and wherein i is from 1 to N/2; at a (2n-1)th interaction stage a waveguide numbered i wherein i is from 1 to N-1 in units of 2 are formed to interface with a waveguide numbered i+1 wherein the interfacing is within a layer; and if n is 4 or greater then: at a first substage of each interaction stage given by j, wherein j is from n+1 to 2n-3 in increments of 1, waveguides numbered i+r are formed to interface with waveguides numbered $(i + r + \frac{N}{2} + 2^{2n-j-2})\mathrm{mod}\,N$ wherein i is given by i=1+d×$2^{2n-j-1}$ wherein d is from 0 to $\frac{N}{2^{2n-j}} - 1$ in increments of 1 and r is from 0 to $2^{2n-j-2}$ - 1 in increments of 1; and at a second substage of each interaction stage given by j, waveguides numbered i+r are formed to interface with waveguides numbered $(i + r + \frac{N}{2} + 2^{2n-j-2})\mathrm{mod}\,N$ wherein i is given by i = 1 + $d \times 2^{2n-j-1}$ wherein d is from $\frac{N}{2^{2n-j}}$ to $\frac{N}{2^{2n-j-1}} - 1$ in increments of 1 and r is from 0 to $2^{2n-j-2}$ - 1 in increments of 1. Thus, this enables the alternative implementation of the banyan-type network to be used as part of a Benes network.

In some examples n is 4 or greater and for each interaction stage given by j, wherein j is from n+1 to 2n-3 in increments of 1, either the first plurality of waveguides and/or the second plurality of waveguides are formed to displace laterally from the position of the waveguides in the first interaction stage by $2^{2n-j-2}$ such that: at a first substage of each interaction stage given by j the ith waveguide of the first plurality of waveguides is formed on the first substrate to be adjacent to a waveguide numbered N/2+$2^{2n-j-2}$+i of the second plurality of waveguides on the second substrate, wherein i is from 1 to N/2-$2^{2n-j-2}$; at a second substage of each interaction stage given by j the ith waveguide of the first plurality of waveguides is formed on the first substrate to be adjacent to a waveguide numbered N/2-$2^{2n-j-2}$+i of the second plurality of waveguides on the second substrate, wherein i is from 1+$2^{2n-j-2}$ to N/2. Hence, the horizontal shifting of the waveguides enables the implementation of a Benes network by aligning waveguides.

In some examples n is 4 or greater and: at the nth or n+1th interaction stage the first substage is performed before the second substage and in subsequent interaction stages an order of implementing the substages alternates between performing the second substage before the first substage and performing the first substage before the second substage; or at the nth or n+1th interaction stage the second substage is performed before the first substage and in subsequent interaction stages an order of implementing the substages alternates between performing the first substage before the second substage and performing the second substage before the first substage. This reduces the amount of lateral displacement required to implement the interaction stages by having shifts in the same direction follow each other.

In some examples at least one waveguide of the N waveguides has no input signal; or at least one waveguide of the N waveguides has no output signal. In addition or as an alternative wherein the optical circuit is being used for X input to Y output network applications or switching wherein X is less than or equal to N and Y is less than or equal to N. Thus, while the optical circuit may comprise N waveguides, not all waveguides may contain an optical signal that is used for network applications or switching. Thus, a N waveguide optical banyan-type network or Benes network can be used to implement a smaller banyan-type network or Benes network.

In some examples the waveguides interface via at least one of binary switches, Mach-Zehnder interferometer or 50/50 beam splitters. This provides a way for waveguides to interface.

In some examples the first substrate and the second substrate are the same substrate. In other examples the first substrate is a different substrate from the second substrate and the first substrate and the second substrate are joined using wafer-to-wafer bonding.

In some examples the banyan-type network or Benes network is sub-circuit of a larger optical circuit.

In some examples the banyan-type network comprises at least one of a butterfly network, an omega network, a banyan network, or a baseline network, an inverse butterfly network, an inverse omega network, an inverse banyan network or an inverse baseline network.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1a shows waveguides interfacing as part of a first interaction stage of a N=16 banyan-type network;
Figure 1b shows waveguides interfacing as part of a second interaction stage of a N=16 banyan-type network;
Figure 1c shows waveguides interfacing as part of a third interaction stage of a N=16 banyan-type network;
Figure 1d shows waveguides interfacing as part of a fourth interaction stage of a N=16 banyan-type network;
Figure 2 shows an example of waveguides in an optical circuit to show interaction stages and cross-overs;
Figure 3 shows waveguides interfacing as part of a N=8 Benes network;

Figure 4 shows waveguides interfacing as part of a N=8 banyan-type network; and

Figure 5 shows an example of a Mach-Zehnder interferometer which can be used to generate an interface between waveguides.

Common reference numerals are used throughout the figures to indicate similar features.

Detailed Description

A banyan-type networks, otherwise known as a banyan-type interconnection networks, or a banyan-type circuits include banyan networks/circuits, baseline networks/circuits, omega networks/circuits, butterfly networks/circuits, inverse banyan networks/circuits, inverse baseline networks/circuits, inverse omega networks/circuits and/or inverse butterfly networks/circuits. In this regard, the banyan-type network is topologically equivalent to the baseline network, the butterfly network, the omega network and their inverses. In other words, the implementation of a banyan network comprises an implementation of an equivalent butterfly network, omega network, baseline network, inverse butterfly network, inverse omega network or inverse baseline network since these circuits are equivalent minus trivial relabeling. Thus the butterfly, omega, baseline, banyan networks and their inverses can be considered to be of banyan-type. Hence, for convenience the term banyan-type network is used to refer to all networks that are topologically equivalent to the banyan-type network including butterfly networks, omega networks, banyan networks, baseline networks, and their inverses. Banyan-type networks are effective switches, networks or sub-circuits in optical circuits providing reconfigurable N to N switching as well as being suitable to implement a discrete Fourier transform.

In addition to the above advantage, banyan-type networks can be used to form a Benes network which provides even more general optical switching. The Benes network can also be called a Benes interconnection network, a Benes switch and a Benes circuit. In addition to enabling the formation of a Benes network, a banyan-type network can be used as interferometer or to, for example, form a sine-cosine fractal circuit.

Typically when forming a banyan-type network and hence a Benes network in an optical circuit, waveguides have to cross each other on a single substrate and/or layer of a substrate to provide suitable connectivity. This can be challenging to implement as crossovers occurring within a single layer cause non-negligible crosstalk and losses. In the present application a banyan-type network and consequently a Benes circuit is described that is formed over two layers with the waveguides in each layer remaining in a fixed order and not crossing each other. This removes the need for waveguides in the same layer to cross and hence results in an improved implementation of the banyan-type network and Benes network. In some examples, the two layers may be formed on the same substrate. In other examples, each layer may be formed on a separate substrate and the two layers joined by wafer-to-wafer bonding.

The banyan-type network and Benes network described can have uses in quantum computing and quantum networking, thus the optical circuit may be an optical quantum circuit. However, the banyan-type network and Benes network described also have applications in telecoms and classical optics so the N to N routing may be of classical optical signals. Thus, the banyan-type and Benes networks may also have classical uses.

The application describes two specific examples for implementing the banyan-type network and then the Benes network. This banyan-type network and Benes network can form an entire optical circuit. However, in other examples, the banyan-type network or Benes network can be a subcircuit that forms part of a larger optical circuit. In some examples, multiple banyan-type networks or Benes networks may be joined to form a more complex switching, routing, or networking circuit. In a first example of the application, all interactions between waveguides are between-layer interactions. This removes challenges involved in having in-layer interactions in more than one layer. In addition, this enables the banyan-type network and Benes network to be built using active elements in only a single layer to overcome challenges in forming active optical elements in more than one layer. In this context active optical elements can be taken to be components of an optical circuit that one requires control over for the proper and complete operation of the circuit, including (but not limited to) phase shifters. In the second example, there are in-layer and between layer interactions. While this example can require interactions between waveguides in multiple layers, it reduces the amount of shifting of waveguides required so may be more efficient in scenarios where interactions can occur between waveguides in multiple layers.

Given the above, an optical circuit is described. The optical circuit is used to implement a banyan-type network. The optical circuit is formed from a first substrate that forms a first layer of the optical circuit and a second substrate that forms a second layer of the optical circuit. In some examples, the first substrate is a first layer of a substrate while the second substrate is a second layer of the same substrate. In other words, the first substrate and second substrate are the same substrate. In other examples, the first substrate and second substrate are different substrates and are joined to form two layers of the optical circuit for example by wafer-to-wafer bonding. A first plurality of waveguides are formed on the first substrate and a second plurality of waveguides are formed on the second substrate. The first and second plurality of waveguides are formed such that at least some of the first plurality of waveguides are configured/arranged to interface with at least some of the second plurality of waveguides in order to form a banyan-type network.

The at least some of the first plurality of waveguides and the at least some of the second plurality of waveguides can be formed to interface with each other by, for example, narrowing the waveguide either horizontally or vertically, e.g. reducing a horizontal and/or vertical cross section of the waveguides. This will cause the optical mode in the waveguides to occupy a larger (transversal) spatial volume, allowing light modes in different waveguides to overlap. In addition, or as an alternative, the waveguides can be made to interface by narrowing a gap between the waveguides that will interface either by aligning them horizontally and/or by decreasing a vertical distance between the waveguides, using for example vertical tapering.

The first plurality of waveguides are formed on the first substrate or layer to remain in a same order throughout the banyan-type network or where applicable Benes network. This means that no waveguide of the first plurality of waveguides crosses another waveguide of the first plurality of waveguides in the banyan-type or Benes network. Similarly, the second plurality of waveguides are formed on the second substrate or layer to remain in a same order throughout the banyan-type network or where applicable Benes network. This means no waveguide for the second plurality of waveguides crosses another waveguide of the second plurality of waveguides in the banyan-type or Benes network. Hence, in the banyan-type network, and where applicable, Benes network, there are no intra-layer or in-layer crossovers of waveguides. As mentioned above, forming such crossovers can lead to non-negligible crosstalk and losses that are less likely on inter-layer crossovers where it is possible to ensure that mode confinement is sufficient that crosstalk between the crossing waveguides in negligible. Thus, the optical circuit above provides an improved way of implementing a banyan-type network.

It is noted that in some examples, input ports may be provided to waveguides on only one layer. Thus, in these examples, before the implementation of the banyan-type network, light may be input into waveguides on a single layer and then coupled to waveguides in another layer to result in the distribution of a first plurality of waveguides on the first layer or substrate and the second plurality of waveguides on the second layer or substrate. This would be within the abilities of the skilled person and ways to do this are known. Thus, given this is not part of the banyan-type network or Benes network itself, it is not described in more detail here.

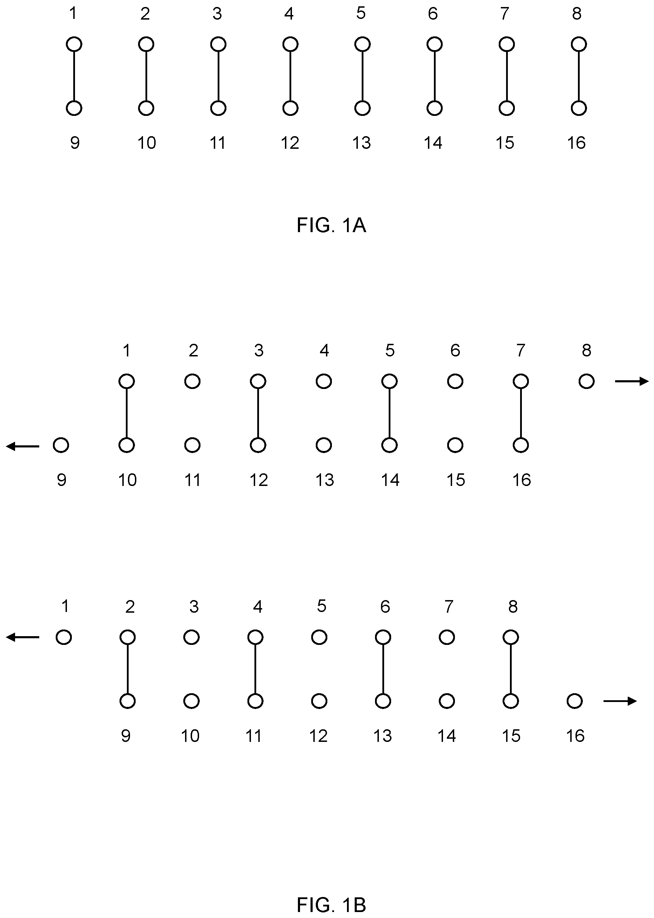

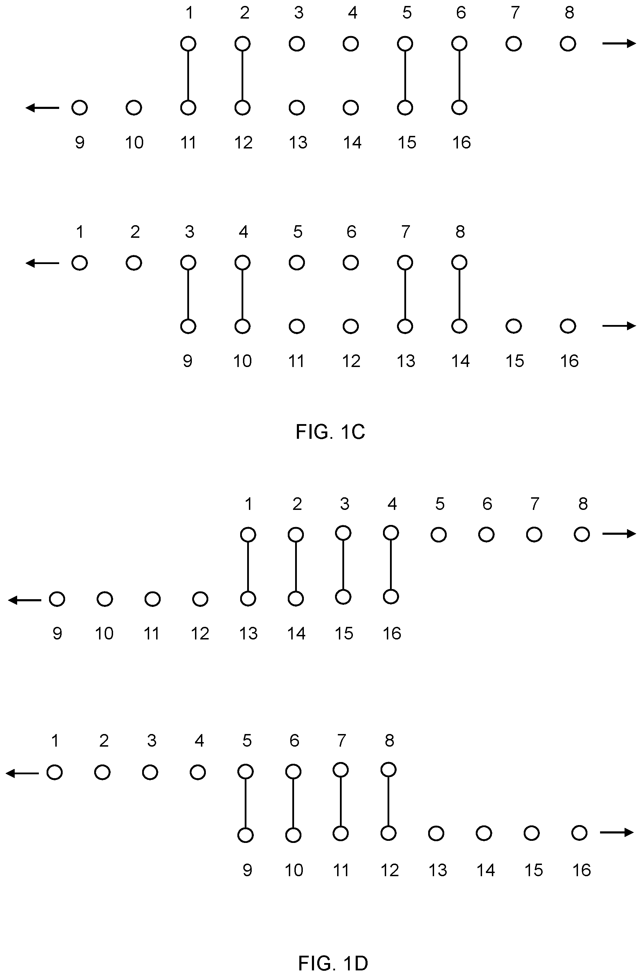

Figure 1 shows a first implementation of the banyan-type network in accordance with the present application. In this example the banyan-type network is implemented only using inter-layer or between-layer interactions/interfacing. In other words, the banyan-type network is implemented wherein waveguides from the first plurality of waveguides interface with waveguides from the second plurality of waveguides but there is no interfacing of waveguides from the first plurality of waveguides with other waveguides from the first plurality of waveguides or waveguides from the second plurality of waveguides with other waveguides from the second plurality of waveguides. This can simplify the formation of the banyan-type network as having intra-layer interfacing of waveguides on more than one layer can be challenging. In addition, this allows banyan-type networks to be formed using active elements in one a single layer. In some examples the layer containing the active elements may be a top layer.

In the example shown in Figure 1 there are 16 waveguides in total over the two layers/substrates. However, any number of waveguides can be present over the two layers/substrates provided that N is of the form $N=2^n$ and N is greater than or equal to 4, or greater than or equal to 8. In some examples, not all the waveguides may be fully formed and the enumeration may cover positions where waveguides may be formed if they were being used. In addition, in some examples, some waveguides may be formed or partially-formed but not contain other optical elements such as beam splitters or phase shifters. In some examples n is a positive integer taking a value of at least 2 or at least 3. In order to describe how the first and second plurality of waveguides interface, the waveguides are numbered from 1 to N. The number of waveguides on the first layer/substrate is the same as the number of waveguides on the second layer/substrate. Thus, each layer/substrate has N/2 waveguides. The waveguides are numbered consecutively. The first plurality of waveguides on the first layer are numbered from 1 to N/2 while the second plurality of waveguides on the second layer are numbered from N/2+1 to N.

While the banyan-type network has N waveguides, the banyan-type network may be used to perform switching or network applications for fewer inputs or outputs. For example, if it is desired to perform X to X switching or network applications of X optical signals where X is any integer over 3 or over 4 and X is not necessarily of the form $2^n$, the banyan-type network is formed to have $N=2^n$ waveguides but not all waveguides are used for the switching. In addition, when a waveguide is not used for switching optical elements such as beam splitters or phase shifters associated with the waveguide may not be formed. In addition or as an alternative at least some waveguides not used for switching may not be formed or fully formed. When X is not of the form $2^n$, a banyan-type network having N waveguides wherein $N \geq X$ and N is given by $N=2^n$ is used and some waveguides may not be used for input or output of signals. In some examples of this case n is given by $\lceil \log_2 X \rceil$ wherein $\lceil , \rceil$ is the ceiling function. As well as performing X to X switching wherein X<N the banyan-type network may be used to perform X to Y switching wherein X is not necessarily equal to Y. In this scenario a banyan-type network of size N waveguides wherein $N \geq X$ and $N \geq Y$ can be used. In such a case, the choice of number of waveguides in the banyan-type network can be based on the greater of X or Y and can be chosen for the greater of X or Y as described above.

As mentioned above, the first plurality of waveguides are formed on the first substrate or layer and the second plurality of waveguides are formed on the second substrate or layer to interface with each other in the form of a banyan-type network. This involves waveguides from the first plurality of waveguides on the first layer/substrate being formed to interface with waveguides from the second plurality of waveguides on the second layer/substrate in a plurality of interaction stages which can also be called interfacing stages. In order to implement the banyan-type network, at a first interaction stage, a waveguide numbered i from the first plurality of waveguides on the first layer/substrate is configured or formed to interface with a waveguide numbered i+N/2 from the second plurality of waveguides on the second layer/substrate wherein i goes from 1 to N/2 in increments of 1. Units of 1 can also be referred to as unit increments. i going from 1 to N/2 in units of 1 means i can take values 1, 2, 3, 4, ... ,N/2. In order to enable the waveguides to interface a waveguide numbered i of the first plurality of waveguides on the first substrate/layer may be formed vertically adjacent e.g. above or below a waveguide numbered i+N/2 on the second substrate/layer. A first waveguide on a first substrate/layer being vertically adjacent a second waveguide on second substrate/layers means the first waveguide is on a different substrate/layer to the second waveguide but that the second waveguide is the nearest waveguide to the first waveguide on the second substrate/layer in a horizontal direction.

An example of the first interaction stage in the situation where N=16 and n=4 is shown in Figure 1a. In this example, waveguides numbered 1 to 8 are on a first layer or substrate and waveguides numbered 9 to 16 are on a second layer or substrate. In the first interaction stage waveguide 1 is formed to interface with waveguide 9, waveguide 2 with waveguide 10, waveguide 3 with waveguide 11 etc. As mentioned above, the waveguides can be formed to interface by either reducing a vertical and/or horizontal distance between the waveguides that will interface and/or reducing a width or cross-section of the waveguides formed to interface. The interfacing is pairwise in that it is between two waveguides.

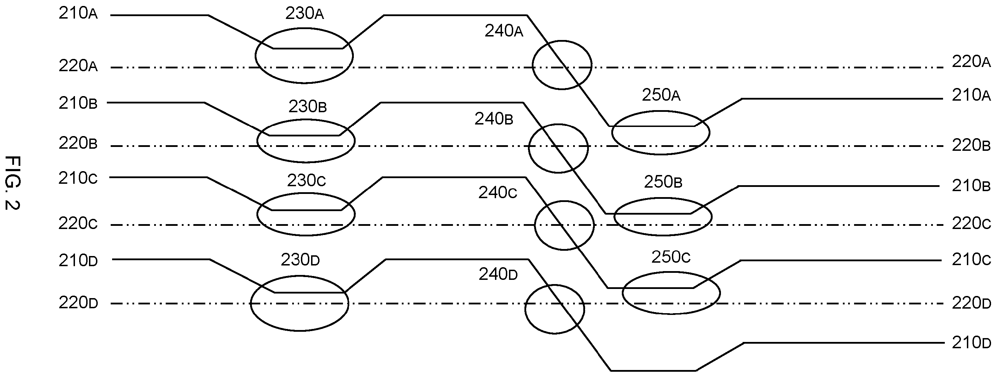

Referring briefly to Figure 2, Figure 2 shows an optical circuit 200 formed over two layers or substrates. Figure 2 illustrates an example of how waveguides can be formed to interface with each other in an example optical circuit. Figure 2 is purely exemplary for explaining how waveguides interface and cross-over and should not be considered limiting. For simplicity, Figure 2 shows only eight waveguides and two interaction stages. However, this is only illustrative and the form of interfacing in Figure 2 can be used to implement the optical circuits described with respect to Figures 1, 3 and 4. In Figure 2, waveguides 210a, 210b, 210c and 210d are formed on a first layer or substrate and waveguides 220a, 220b, 220c and 220d are formed on a second layer or substrate. Each waveguide 210, 220 runs from an input port to an output port. In a first set of interaction stages 230a, 230b, 230c, and 230d the waveguides in the first layer are configured/formed to interface with the waveguides from the second layer. In the example in Figure 2 waveguide 210a interfaces with waveguide 220a, waveguide 210b interfaces with waveguide 220b, waveguide 210c interfaces with waveguide 220c and waveguide 210d interfaces with waveguide 220d. In some examples, the waveguides can be made to interface by reducing a horizontal separation between the vertically adjacent waveguides over the two layers while also either narrowing a vertical separation between the waveguides and/or narrowing the width or cross-section of the waveguides at the interface stage. A first waveguide on a first layer and second waveguide on a second layer being vertically adjacent means the first waveguide on the first layer is closer horizontally to the second waveguide on the second layer than any other waveguide on the second layer. In other words the first waveguide on the first layer is closest horizontally to the second waveguide on the second layer. The two waveguides being closest to each other horizontally does not necessarily mean the two waveguides are directly on top of each other or vertically aligned (although in some examples this could be the case). Thus, reducing a horizontal separation between vertically adjacent waveguides can comprise reducing a horizontal distance between two waveguides on different layers that are the closest to each other horizontally. In addition, it is possible to make waveguides that were previously not vertically adjacent, vertically adjacent by reducing a horizontal separation between these waveguides. In other examples, the horizontal separation between vertically adjacent waveguides may be kept constant and the waveguides can be made to interface by narrowing a vertical separation between the waveguides and/or narrowing a width or cross-section the waveguides at the interface stage with this resulting in interfacing between the vertically adjacent waveguides. In further examples both the horizontal separation can be reduced and the vertical separation can be reduced, the horizontal separation can be reduced and the waveguides can be narrowed or the horizontal separation can be reduced, the vertical separation can be reduced and the waveguides can be narrowed. The narrowing of the waveguides leads to mode deconfinement which induces optical coupling or interfacing of the light in the pair of waveguides being narrowed.

Figure 2 also shows a shift, inter-layer crossover or between-layer crossover where waveguides from the first layer or substrate pass over or crossover waveguides from the second layer or substrate without interacting or interfacing. In Figure 2 this is done in stage 240a where waveguide 210a crosses waveguide 220a without interfacing, stage 240b where waveguide 210b crosses waveguide 220b without interfacing, stage 240c where waveguide 210c crosses waveguide 220c without interfacing and stage 240d where waveguide 210d crosses waveguide 220d without interfacing. While the waveguides on the first layer or substrate cross the waveguides on the second layer or substrate, the waveguides on each layer remain in the same order and there is no intra-layer crossovers. As mentioned above, such intra-layer crossovers can be challenging because non-negligible crosstalk and losses occur when waveguides on a same layer crossover. The waveguides on a first layer or substrate can be made to cross waveguides on a second layer or substrate without interfacing or interacting by keeping a large vertical separation between the waveguides on the different layers using vertical tapering and/or increasing a width or cross-section of the waveguides to increase confinement of the light to the waveguide. It is noted that the crossovers of waveguides on different layers shown in Figure 2 is purely illustrative and the amount of crossover and which waveguides crossover (provided waveguide ordering on each layer is maintained) may vary depending on the precise optical circuit being implemented. In addition, while in some examples all waveguides on the first layer may crossover waveguides in the second layer, in some examples only some waveguides from the first layer crossover waveguides in the second layer.

Figure 2 also shows how after a crossover, a second interaction stage can be implemented wherein waveguides from the first layer or substrate once again interface with waveguides from the second layer or substrate but the interfacing is between different pairs of waveguides. In the example shown in Figure 2 waveguide 210a interfaces with waveguide 220b at stage 250a, waveguide 210b with waveguide 220c at stage 250b and waveguide 210c with waveguide 220d at stage 250c. In this example, waveguides 210d and 220a are not interfacing with other waveguides. Once again, this interfacing can be brought about by forming the waveguides to narrow at the interface point and/or reducing a horizonal and/or vertical distance between the waveguides which interface. While the precise waveguides interfacing in Figure 2 are purely exemplary, Figure 2 illustrates how waveguides on one layer or substrate can be shifted with respect to waveguides on a second layer or substrate to enable different waveguides from one layer or substrate to interface with different waveguides from the second layer or substrate. The shift can be considered a displacement of the waveguide as the waveguide is followed along the direction of propagation and can be bought about by constructing or forming the waveguide to shift the direction of propagation as shown in Figure 2.

Returning now to Figure 1, in Figure 1a a first interaction stage was implemented in which waveguides numbered i from a first plurality of waveguides on a first layer/substrate interfaced with waveguides numbered i+N/2 from a second plurality of waveguides on a second layer/substrate wherein N is of the form $2^n$ and n is a positive integer that is 2 or greater or in some examples 3 or greater. While the banyan-type network has N waveguides, the banyan-type network may be used to perform switching or network applications for fewer inputs or outputs as described above. In order to implement the banyan-type network, after the first interaction stage waveguides on one or both of the first substrate or layer and second substrate or layer are shifted such that the waveguides on the first substrate or layer crossover or shift with respect to the waveguides on the second substrate or layer. This crossover or shift can be done as described with respect to Figure 2 by widening the waveguides at or just before the crossover point and/or increasing the vertical distance between the waveguides on each substrate or layer at the crossover point. While the waveguides on the first substrate or layer are described as shifting with respect to the waveguides on the second substrate or layer, the first and/or second plurality of waveguides may be the ones to move horizontally to enable the shift. As mentioned with respect to Figure 2, during this shift the first plurality of waveguides remain in the same order and the second plurality of waveguides remain in the same order. In other words, no waveguide in the first plurality of waveguides crosses another waveguide in the first plurality of waveguides and no waveguide in the second plurality or waveguides crosses another waveguide in the second plurality of waveguides. Thus, there is no need for intra-layer crossovers.

In order to implement the banyan-type network a further k-1 interaction stages are implemented where k goes from 2 to n in increments of 1. In other words k goes from 2 to $\log_2 N$ in increments of 1. Each of the k interaction stages is split into two substages. In a first of the substages the first plurality of waveguides on the first layer can shift by $2^{k-2}$ waveguides to the right with respect to the alignment of the first plurality of waveguides with respect to the second plurality of waveguides at the first interaction stage. In a second of the substages the first plurality of waveguides on the first layer can shift by $2^{k-2}$ waveguides to the left with respect to the alignment of the first plurality of waveguides with respect to the to the second plurality of waveguides at the first interaction stage. The skilled person would understand that the first and second interaction stages can be reversed such that the shift is initially to the left and then to the right. In addition, while the shift is described as the first plurality of waveguides moving with respect to the second plurality of waveguides, either or both plurality of waveguides can move to introduce the shift wherein the second plurality of waveguides move in an opposite direction to the first plurality of waveguides.

The shift means that in the first substage of each interaction stage given by k where k goes from 2 to n in increments of 1, a waveguide numbered i from the first plurality of waveguides may be adjacent to a waveguide numbered $N/2+2^{k-2}+i$ of the second plurality of waveguides wherein i is from 1 to $N/2-2^{k-2}$. After the shift of the first substage waveguides numbered $N/2-2^{k-2}+1$ to N/2 in the first plurality of waveguides may no longer align with the waveguides from the second plurality of waveguides but may align with other waveguides in the optical circuit if such waveguides are present. The shift for the second substage means that in the second substage of each interaction stage given by k where k goes from 2 to n in increments of 1, a waveguide numbered i from the first plurality of waveguides may be adjacent to a waveguide numbered $N/2-2^{k-2}+i$ from the second plurality of waveguides wherein i is from $1+2^{k-2}$ to $N/2$. After the shift waveguides numbered from 1 to $2^{k-2}$ in the first plurality of waveguides may no longer align with the second plurality of waveguides but may align with other waveguides in the optical circuit if such waveguides are present. It is noted that while the waveguides in the first plurality of waveguides remain in the same order and waveguides in the second plurality of waveguides remain in the same order, the horizontal separation between waveguides may be reduced or increased as appropriate to reduce a space taken up by the optical circuit and/or to ensure suitable space to enable interfacing.

While the waveguides may be aligned as defined above, in the 2nd and higher interaction stage not all of the first plurality of waveguides on the first layer/substrate need to interface with all the second plurality of waveguides on the second layer/substrate to which they are aligned. In particular, in the first substage of each interaction stage given by k where k goes from 2 to n in increments of 1, the waveguides numbered i+r are formed to interface with waveguides numbered

$(i + r + \frac{N}{2} + 2^{k-2}) \bmod N$ or $i + r + \frac{N}{2} + 2^{k-2}$ wherein, given N is of the form $N=2^n$, i is given by $i = 1 + d \times 2^{k-1}$ wherein d is from 0 to $\frac{N}{2^k} - 1$ in increments of 1 and r is from 0 to $2^{k-2} - 1$ in increments of 1. Similarly, in the second substage of each interaction stage given by k where k goes from 2 to n in increments of 1, waveguides numbered i+r are formed to interface with waveguides numbered $(i + r + \frac{N}{2} + 2^{k-2}) \bmod N$ wherein, given N is of the form $N=2^n$, i is given by $i = 1 + d \times 2^{k-1}$ wherein d is from $\frac{N}{2^k}$ to $\frac{N}{2^{k-1}} - 1$ in increments of 1 and r is from 0 to $2^{k-2} - 1$ in increments of 1.

It is noted that while in each substage, the waveguides from the first plurality of waveguides may be aligned with the waveguides from the second plurality of waveguides as described above, in some examples only the waveguides which interface need to be aligned. Thus, in some examples providing the ordering of waveguides is maintained within each layer non-interfacing waveguides on the first substrate/layer may be offset from non-interfacing waveguides on the second substrate/layer to reduce a risk of an accidental interface. In addition, a horizontal separation between non-interfacing waveguides on the same layer may be reduced in order to reduce a space taken up by the optical circuit. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

Figure 1b shows the two substages of the second interaction stage of a banyan-type network where N=16, Figure 1c shows the two substages of the third interaction stage of a banyan-type network where N=16 and Figure 1d shows the two substages of a fourth interaction stage of a banyan-type network where N=16. In the example shown in Figure 1 (and hence Figures 1a to 1d) the non-interfacing waveguides are showed aligned between layers for convenience. However, as described above, this will not necessarily always be the case as in some examples the waveguides not interfacing are arranged to be non-aligning to reduce a risk of undesired interfaces.

Figure 1b shows a second interaction stage (e.g. k=2) formed of two substages 120 and 125. In the first substage 120, the first plurality of waveguides on the first layer have shifted by $2^{k-2} = 2^0 = 1$ waveguides to the right compared to the relative position of the first plurality of waveguides and second plurality of waveguides from the first interface/interaction stage. As, in this example, the horizontal separation between waveguides on each layer/substrate is being kept constant, this means that a waveguide numbered i is aligned with a waveguide numbered $N/2+2^{k-2}+i = N/2+1+i$ from the second plurality of waveguides wherein i is from 1 to $N/2-2^{k-2} = N/2-1$. As defined above not all aligned waveguides interface, instead waveguides numbered i+r are formed to interface with waveguides numbered $i + r + \frac{N}{2} + 2^{k-2}$ wherein, given N is of the form $N=2^n$, i is given by $i=1+d\times2^{k-1}$ wherein d is from 0 to $\frac{N}{2^k} - 1$ in increments of 1 and r is from 0 to $2^{k-2} - 1$ in increments of 1. In the second substage 125, the first plurality of waveguides on the first layer have shifted by $2^{k-2} = 2^0 = 1$ waveguides to the left compared to the relative position of the first plurality of waveguides and second plurality of waveguides from the first interface/interaction stage. As horizontal separation between waveguides on each layer/substrate is being kept constant in this example, this means that a waveguide numbered i from the first plurality of waveguides is aligned with a waveguide numbered $N/2-2^{k-2}+i = N/2-1+i$ from the second plurality of waveguides wherein i is from $1+2^{k-2} = 2$ to $N/2$. As defined above not all aligned waveguides interface, instead waveguides numbered i+r are formed to interface with waveguides numbered $(i + r + \frac{N}{2} + 2^{k-2}) \bmod N$ wherein, given N is of the form $N=2^n$, i is given by $i = 1 + d \times 2^{k-1}$ wherein d is from $\frac{N}{2^k}$ to $\frac{N}{2^{k-1}} - 1$ in increments of 1 and r is from 0 to $2^{k-2} - 1$ in increments of 1. While Figure 1b shows both interfacing and non-interfacing waveguides aligned, in some examples only the interfacing waveguides are aligned and the non-interfacing waveguides can be offset horizontally with respect to each other between layers or substrates provided the ordering of waveguides within each layer is maintained. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

Figure 1c, shows a third interaction stage (e.g. k=3) formed of two substages 130 and 135. In the first substage 130, the first plurality of waveguides on the first layer or substrate have shifted by $2^{k-2} = 2^1 = 2$ waveguides to the right compared to the relative position of the first plurality of waveguides and second plurality of waveguides from the first interface/interaction stage. As, in this example, the horizontal separation between waveguides on each layer/substrate is being kept constant, this means that a waveguide numbered i is aligned with a waveguide numbered $N/2+2^{k-2}+i = N/2+2+i$ from the second plurality of waveguides wherein i is from 1 to $N/2-2^{k-2} = N/2-2$. As defined above not all aligned waveguides interface, instead waveguides numbered i+r are formed to interface with waveguides numbered

$$i + r + \frac{N}{2} + 2^{k-2}$$

wherein, given N is of the form $N=2^n$, i is given by i=1+d×$2^{k-1}$ wherein d is from 0 to $\frac{N}{2^k} - 1$ in increments of 1 and r is from 0 to $2^{k-2}$ - 1 in increments of 1. In the second substage 135, the first plurality of waveguides on the first layer have shifted by $2^{k-2} = 2^1 = 2$ waveguides to the left compared to the relative position of the first plurality of waveguides and second plurality of waveguides from the first interface/interaction stage. As the horizontal separation between waveguides on each layer/substrate is being kept constant in this example, this means that a waveguide numbered i from the first plurality of waveguides is aligned with a waveguide numbered $N/2-2^{k-2}+i = N/2-2+i$ from the second plurality of waveguides wherein i is from $1+2^{k-2} = 3$ to N/2. As defined above not all aligned waveguides interface, instead waveguides numbered i+r are formed to interface with waveguides numbered

$$(i + r + \frac{N}{2} + 2^{k-2}) \bmod N$$

wherein, given N is of the form $N=2^n$, i is given by $i = 1 + d \times 2^{k-1}$ wherein d is from $\frac{N}{2^k}$ to $\frac{N}{2^{k-1}} - 1$ in increments of 1 and r is from 0 to $2^{k-2}$ - 1 in increments of 1. While Figure 1c shows both interfacing and non-interfacing waveguides aligned, in some examples only the interfacing waveguides are aligned and the non-interfacing waveguides can be offset horizontally with respect to each other between layers provided the ordering of waveguides within each layer is maintained. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

Figure 1d, shows a third interaction stage (e.g. k=4) formed of two substages 140 and 145. In the first substage 140, the first plurality of waveguides on the first layer or substrate have shifted by $2^{k-2} = 2^2 = 4$ waveguides to the right compared to the relative position of the first plurality of waveguides and second plurality of waveguides from the first interface/interaction stage. As, in this example, the horizontal separation between waveguides on each layer/substrate is being kept constant, this means that a waveguide numbered i is aligned with a waveguide numbered $N/2+2^{k-2}+i = N/2+4+i$ from the second plurality of waveguides wherein i is from 1 to $N/2-2^{k-2} = N/2-4$. In the example in Figure 1d, waveguides numbered i+r are formed to interface with waveguides numbered $(i + r + \frac{N}{2} + 2^{k-2}) \bmod N$ wherein, given N is of the form $N=2^n$, i is given by i=1+d×$2^{k-1}$ wherein d is from 0 to $\frac{N}{2^k} - 1$ in increments of 1 and r is from 0 to $2^{k-2}$ - 1 in increments of 1. In the second substage 145, the first plurality of waveguides on the first layer have shifted by $2^{k-2} = 2^2 = 4$ waveguides to the left compared to the relative position of the first plurality of waveguides and second plurality of waveguides from the first interface/interaction stage. As, in this example, the horizontal separation between waveguides on each layer/substrate is being kept constant, this means that a waveguide numbered i from the first plurality of waveguides is aligned with a waveguide numbered $N/2-2^{k-2}+i = N/2-4+i$ from the second plurality of waveguides wherein i is from $1+2^{k-2} = 5$ to N/2. As defined above not all aligned waveguides interface, instead waveguides numbered i+r are formed to interface with waveguides numbered

$$(i + r + \frac{N}{2} + 2^{k-2}) \bmod N$$

wherein, given N is of the form $2^n$, i is given by $i = 1 + d \times 2^{k-1}$ wherein d is from $\frac{N}{2^k}$ to $\frac{N}{2^{k-1}} - 1$ in increments of 1 and r is from 0 to $2^{k-2}$ - 1 in increments of 1. While in some examples both interfacing and non-interfacing waveguides aligned, in other examples only the interfacing waveguides are aligned and the non-interfacing waveguides can be offset horizontally with respect to each other between layers provided the ordering of waveguides within each layer is maintained. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

While Figure 1 (and hence Figures 1a to 1d) show an example where N=16 and =4, N can be any value of the form $N=2^n$ wherein n is an integer greater than 2 or greater than 3, Thus, the banyan-type network can also be implemented in a larger system. In addition, as described above not all waveguides may be used as part of each switch and the switching can therefore have fewer inputs and/or fewer outputs than N. It is noted that in addition to not requiring any crossovers of waveguides within a single layer, something which can cause non-negligible cross-talk and noise, the circuit described with respect to Figure 1 also only uses between-layer interfaces/interactions. In some examples all active optical elements are in a single layer of the optical circuit which can be a top layer. This is beneficial as it can be challenging in some circumstances to form optical circuits over multiple layers which have active optical elements in all of the layers.

While a first and second substage has been defined, the waveguides interfacing in each of these substages are not the same. Thus, the first and second substages can be performed in any order. In other words, the first substage for each stage can be performed first or the second substage for each stage can be performed first. In some examples, the degree to which waveguides need to be displaced can be reduced by ordering the substages so that if a previous stage performed a second substage second, the current stage performs the second substage first. Similarly, if the previous stage performed the first substage second then the current stage can perform the first substage first. In other words, if a second stage (the first stage to introduce displacement) is performed first substage then second substage then subsequent stages alternate between performing second substage followed by first substage and first substage followed by second substage. Similarly, if a second stage is performed second substage then first substage then subsequent stages alternate between performing first substage then second substage and second substage then first substage. This can reduce the amount of lateral displacement of the waveguides and therefore reduces optical path length leading to reduced loss in the attenuation caused by the waveguide.

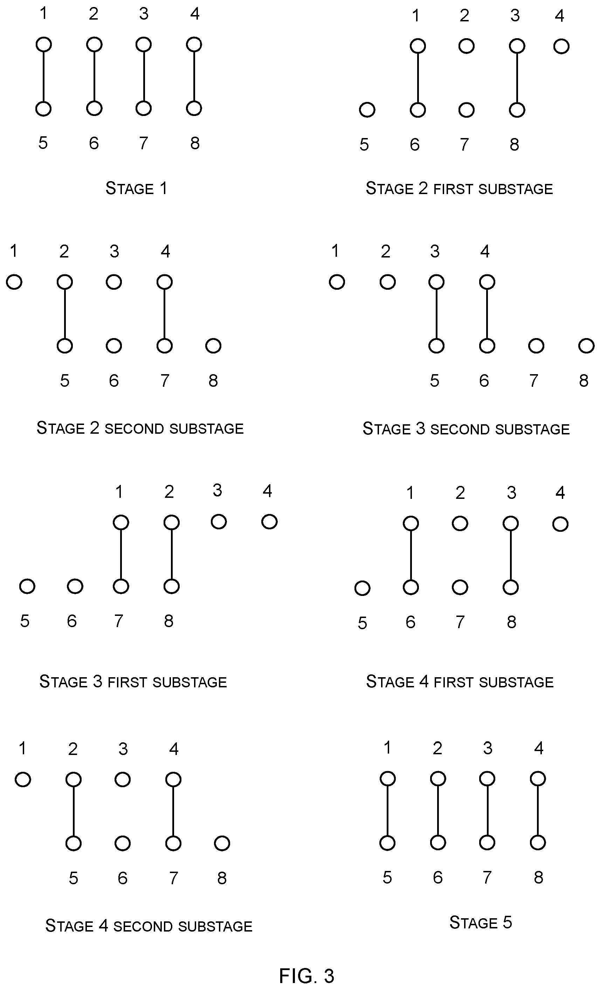

Figure 3 shows an example of a Benes network. While Figure 1 has focused on forming a banyan-type network itself, the banyan-type network is a useful building block for other optical networks or circuits. For example, the optical banyan-type network can be used to form interferometers. In addition, two banyan-type networks positioned back-to-back as mirror images of each other can be used to form a Benes network although in this case the final stage of the banyan-type network is performed only once as described below. An example Benes network is shown in Figure 3 where a set of interactions for a Benes network is shown for an example of 8 waveguides e.g. N=8 and n=3. While the Benes network could be formed for any value of N of the form $N=2^n$ wherein n is an integer that is 2 or greater or 3 or greater, the example of n=3 is illustrated for simplicity.

While the Benes network has N waveguides, the Benes network may be used to perform switching or network applications for fewer inputs or outputs. For example, if it is desired to perform X to X switching or network applications of X optical signals where X is any integer over 3 or over 4 and X is not necessarily of the form $2^n$, the Benes network is formed to have $N=2^n$ waveguides but not all waveguides are used for the switching. In some examples waveguides not used for switching may not contain optical elements such as phase shifters or beam splitters which may have been used for switching. Thus, not all optical elements or components may be formed in all waveguides. In addition or as an alternative at least some of the waveguides not used for switching may not be formed or fully formed. When X is not of the form $2^n$, a Benes network having N waveguides wherein $N \geq X$ and N is given by $N=2^n$ is used and some waveguides may not be used for input or output of signals. In some examples of this case n is given by $\lceil \log_2 X \rceil$ wherein $\lceil . \rceil$ is the ceiling function. As well as performing X to X switching wherein X<N the Benes network may be used to perform X to Y switching wherein X is not necessarily equal to Y. In this scenario a Benes network of size N waveguides wherein $N \geq X$ and $N \geq Y$ can be used. In such a case, the choice of number of waveguides in the Benes network can be based on the greater of X or Y and can be chosen for the greater of X or Y as described above.

The Benes network comprises 2n-1 or $2\log_2 N - 1$ interaction stages wherein n is given by $\lceil \log_2 N \rceil$. As mentioned above N is of the form $N=2^n$ wherein n is at least 2 or at least 3. The first n or $\log_2 N$ interaction stages are those of the banyan-type network. The next n-1 or $\log_2 N$-1 are a mirrored version of the banyan-type network but excluding the nth stage of the banyan-type network. Therefore, as seen in Figure 3 for the example where N=8 and n=3, the first three interaction stages are those of a corresponding banyan-type network. The 4th interaction stage is then the same as the 2nd interaction stage of the banyan-type network and the 5th interaction stage is the same as the first interaction stage of the banyan-type network. As with the corresponding stages of the banyan-type network, interaction stages from n+1 to 2n-2 are split into two substages. In the example shown in Figure 3, n=3 so it is the fourth interaction stage that is split into two substages although for larger n more interaction stages will be split into two substages.

In some examples, as with interaction stages 2 to n in the banyan-type network, interaction stages n+1 to 2n-2 can be implemented by shifting the first plurality of waveguides on the first layer relative to how they are aligned with the second plurality of waveguides on the second layer in the first (or final) interaction stages. This shifting can involve a movement of the first plurality of waveguides, the second plurality of waveguides or both. In addition, as in the above examples, during this shifting the first plurality of waveguides remain in the same order and the second plurality of waveguides remain in the same order. In other words, no waveguide of the first plurality of waveguides crosses another waveguide of the first plurality of waveguides and no waveguide in the second plurality of waveguides crosses another waveguide of the second plurality of waveguides. In a first substage of each interaction stage given by j wherein j is from n+1 to 2n-2 in units of 1, the first plurality of waveguides may be shifted by $2^{2n-j-2}$ waveguides to the right relative to the position of the first plurality of waveguides compared to the second plurality of waveguides at the first (or last) interaction stage. In this case the ith waveguide of the first plurality of waveguides is formed to be adjacent to a waveguide numbered $N/2+2^{2n-j-2}+i$ of the second plurality of waveguides on the second substrate, wherein i is from 1 to $N/2-2^{2n-j-2}$. In a second substage of each interaction stage given by j, the first plurality of waveguides may be shifted by $2^{2n-j-2}$ waveguides to the left relative to the position of the first plurality of waveguides compared to the second plurality of waveguides at the first (or last) interaction stage. In this case the ith waveguide of the first plurality of waveguides is formed to be adjacent to a waveguide numbered $N/2-2^{2n-j-2}+i$ wherein i is from $1+2^{2n-j-2}$ to $N/2$.

In the example shown in Figure 3, n=3 so j goes from 4 to 4 so only takes the value 4. In the first substage then the waveguides from the first plurality of waveguides are shifted by 1 waveguide to the right and waveguide 1 is positioned vertically adjacent to waveguide 6, waveguide 2 vertically adjacent to waveguide to waveguide 7 and waveguide 3 vertically adjacent to waveguide 8. In the second substage the waveguides from the first plurality or waveguides are shifted by 1 waveguide to the left and waveguide 2 is positioned vertically adjacent to waveguide 5, waveguide 3 is positioned vertically adjacent to waveguide 6 and waveguide 4 is positioned vertically adjacent to waveguide 7.

As with the banyan-type network, not all waveguides need to interface at each interaction/interfacing stage. For an interaction stage given by j wherein j is from n+1 to 2n-2 in units of 1, then in a first substage waveguides numbered i+r are formed to interface with waveguides numbered $(i+r+\frac{N}{2}+2^{2n-j-2})\mathrm{mod}N$ wherein, given N is of the form N=$2^n$, i is given by i=1+d×$2^{2n-j-1}$ wherein d is from 0 to $\frac{N}{2^{2n-j}}-1$ in increments of 1 and r is from 0 to $2^{2n-j-2}$ - 1 in increments of 1. In a second substage for each interaction stage given by j, waveguides numbered i+r are formed to interface with waveguides numbered $(i+r+\frac{N}{2}+2^{2n-j-2})\mathrm{mod}N$ wherein, given N is of the form N=$2^n$, i is given by i = 1 + $d \times 2^{2n-j-1}$ wherein d is from $\frac{N}{2^{2n-j}}$ to $\frac{N}{2^{2n-j-1}}-1$ in increments of 1 and r is from 0 to $2^{2n-j-2}$ - 1 in increments of 1. It is noted that while in each substage, the waveguides from the first plurality of waveguides may be aligned with the waveguides from the second plurality of waveguides as described above, in some examples only the waveguides which interface need to be aligned. Thus, in some examples providing the ordering of waveguides in each layer is maintained non-interfacing waveguides on the first substrate/layer may be offset from non-interfacing waveguides on the second substrate/layer to reduce a risk of an accidental interface. In addition, a horizontal separation between non-interfacing waveguides on the same layer may be reduced in order to reduce a space taken up by the optical circuit. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

In the example shown in Figure 3, n=3 so j takes the value 4, in addition r only takes the value 0 thus in the first substage waveguide 1 interfaces with waveguide 6 and waveguide 3 interfaces with waveguide 8 and in the second substage waveguide 5 interfaces with waveguide 2 and waveguide 7 interfaces with waveguide 4. While Figure 3 has concentrated on an example where n=3 and N=8, n can take any value greater than 2. Thus, larger Benes networks can be formed.

These additional interaction stages allow the optical circuit to be used as a Benes switch while still avoiding waveguide crossovers within a layer and intra-layer or in-layer interactions. This simplifies the process of building a Benes switch and also reduces the crosstalk coming from in-layer or intra-layer crossovers of waveguides. Benes network/circuits can be used as interferometers or as part of interferometers and also to provide rearrangeably non-blocking switching in optical depth $2\log_2 N$ - 1 as opposed to the optical depth of N required for planar switching. Reducing optical depth reduces errors and losses and gives a smaller chance of fabrication errors, as well as potentially simplifying the process of forming the optical circuit.

As with the banyan-type network, while a first and second substage has been defined, the waveguides interfacing in each of these substages are not the same. Thus, the first and second substages can be performed in any order. In other words, the first substage for each stage can be performed first or the second substage for each stage can be performed first. In some examples, the degree to which waveguides need to be displaced can be reduced by ordering the substages so that if a previous stage performed a second substage second, the current stage performs the second substage first. Similarly, if the previous stage performed the first substage second then the current stage can perform the first substage first. In other words, if an nth (the last substage of the banyan-type network) or (n+1)th stage (the first stage of the additional stages of the Benes circuit) is performed first substage then second substage then subsequent stages alternate between performing second substage followed by first substage and first substage followed by second substage. Similarly, if an nth or an (n+1)th stage is performed second substage then first substage then subsequent stages alternate between performing first substage then second substage and second substage then first substage. This can reduce the amount of lateral displacement of the waveguides and result in a more efficient optical circuit by reducing optical path length.

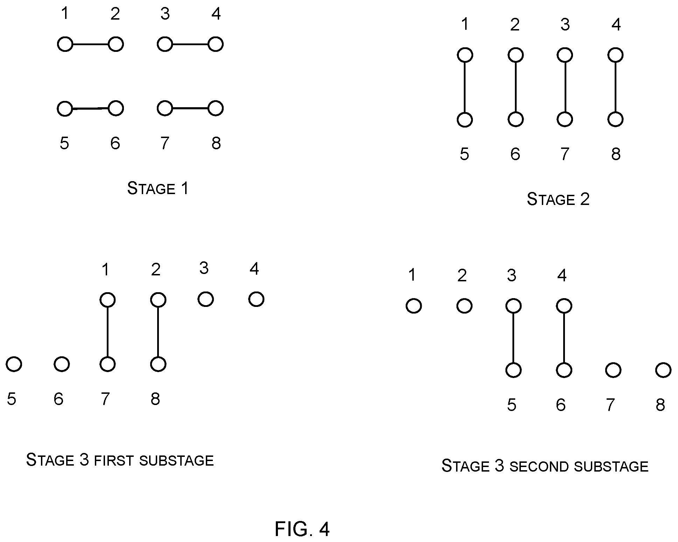

Figure 4 shows an alternative example of a banyan-type network. The above examples have described a banyan-type network which is formed with only inter-layer interactions. However, in cases where intralayer interactions are possible, an alternative implementation can be used that has reduced shifting of the waveguides so potentially shortened optical path lengths. Such an example will now be described with respect to a banyan-type network and then a Benes network formed from two banyan-type networks minus a repeated final stage of the banyan-type network. As with the above example, there are N waveguides wherein N is given by $2^n$ and n is a positive integer of at least 2 or at least 3. The first plurality of waveguides on the first substrate or layer comprises waveguides 1 to N/2 and the second plurality of waveguides on the second substrate or layer comprises waveguides N/2+1 to N. In order to implement a banyan-type network n interaction stages are required.

While the banyan-type network has N waveguides, the banyan-type network may be used to perform switching or network applications for fewer inputs or outputs. For example, if it is desired to perform X to X switching or network applications of X optical signals where X is any integer over 3 or over 4 and X is not necessarily of the form $2^n$, the banyan-type network is formed to have N=$2^n$ waveguides but not all waveguides are used for the switching. In some examples the waveguides not used for switching may not contain optical elements or components such as beam splitters and phase shifters. Hence, optical elements may not be formed in the waveguides not used for switching. In addition or as an alternative, at least some waveguides not used for switching may not be fully formed or formed at all. When X is not of the form $2^n$, a banyan-type network having N waveguides wherein $N \geq X$ and N is given by N=$2^n$ is used and some waveguides may not be used for input or output of signals. In some examples of this case n is given by $\lceil \log_2 X \rceil$ wherein $\lceil . \rceil$ is the ceiling function. As well as performing X to X switching wherein X<N the banyan-type network may be used to perform X to Y switching wherein X is not necessarily equal to Y. In this scenario a banyan-type network of size N waveguides wherein $N \geq X$ and $N \geq Y$ can be used. In such a case, the choice of number of waveguides in the banyan-type network can be based on the greater of X or Y and can be chosen for the greater of X or Y as described above.

In this example in a first interaction stage waveguides interface/interact within each of the first and second layers/substrates. This interfacing/interaction can be implemented by narrowing a gap between the waveguides to interface and/or narrowing the waveguides that are to interface. In the example, a waveguide numbered i where i is from 1 to N-1 in increments of 2 is configured to interface with a waveguide numbered i+1. In a second interaction stage, a waveguide numbered i where i is from 1 to N/2 in increments of 1 is configured to interface with a waveguide numbered i+N/2, this interfacing is between layers and can be implemented using the between layer interfacing described above. Provided n is at least 3 then for each interaction stage given by k wherein k goes from 3 to n, the interaction stage is split into two substages. As above, in a first substage of each interaction stage given by k waveguides numbered i+r are formed to interface with waveguides numbered $(i + r + \frac{N}{2} + 2^{k-2})\mathrm{mod}N$ wherein, given N is of the form N=$2^n$, i is given by i=1+d$\times 2^{k-1}$ wherein d is from 0 to $\frac{N}{2^k} - 1$ in increments of 1 and r is from 0 to $2^{k-2}$ - 1 in increments of 1. In a second substage of each interaction stage given by k waveguides numbered i+r are formed to interface with waveguides numbered $(i + r + \frac{N}{2} + 2^{k-2})\mathrm{mod}N$ wherein, given N is of the form N=$2^n$, i is given by i = 1 + $d \times 2^{k-1}$ wherein d is from $\frac{N}{2^k} - 1$ to $\frac{N}{2^{k-1}} - 1$ in increments of 1 and r is from 0 to $2^{k-2}$ - 1 in increments of 1.

The banyan-type network described above can also be used to form a Benes network by implementing stages 1 to n-1 of the banyan-type network a second time but in the reverse order. In other words, stage n-1 is performed then stage n-2 until stage 1. Thus, to implement a Benes network, a further n-1 interaction stages are introduced. If n is greater than 3 (e.g. if is equal to or greater than 4), then in in a first substage of each interaction stage given by j, wherein j is from n+1 to 2n-3 in increments of 1, waveguides numbered i+r are formed to interface with waveguides numbered $(i + r + \frac{N}{2} + 2^{2n-j-2})\mathrm{mod}N$ wherein, given N is of the form N=$2^n$, i is given by i=1+d$\times 2^{2n-j-1}$ wherein d is from 0 to $\frac{N}{2^{2n-j}} - 1$ in increments of 1 and r is from 0 to $2^{2n-j-2}$ - 1 in increments of 1. Also if n is greater than 3, in a second substage of each interaction stage given by j wherein j is from n+1 to 2n-3 in increments of 1, waveguides numbered i+r are formed to interface with waveguides numbered $(i + r + \frac{N}{2} + 2^{2n-j-2})\mathrm{mod}N$ wherein, given N is of the form N=$2^n$, i is given by i = 1 + $d \times 2^{2n-j-1}$ wherein d is from $\frac{N}{2^{2n-j}}$ to $\frac{N}{2^{2n-j-1}} - 1$ in increments of 1 and r is from 0 to $2^{2n-j-2}$ - 1 in increments of 1. For all cases when n is 2 or greater then, in a (2n-2)th interaction stage a waveguide numbered i from the first plurality of waveguides is formed to interface with the waveguide numbered N/2+i from the second plurality of waveguides, wherein the interfacing is between substrates and so between layers of the optical circuit and wherein i is from 1 to N/2. Also for n is two or greater then in a (2n-1)th interaction stage a waveguide numbered i wherein i is from 1 to N-1 in units of 2 are formed to interface with a waveguide numbered i+1 wherein the interfacing is within a layer

Thus the amount of shifting of waveguides can be reduced by allowing in-layer or intra-layer interactions. In addition, the use of horizontal interfacing can be easier to implement in some cases. As described above, in some examples, light may be coupled into the waveguides in a first layer and then some waveguides coupled to the second layer to form the distribution of waveguides between layers defined above. When this occurs having horizontal interactions may simplify the building of the optical circuit. As with the Benes and banyan-type networks that only have interfacing between layers, the amount of shifting of waveguides required can be reduced by alternating in each interaction stage with substages whether the first or second substage is performed first. This means first substages of one stage follow first substages of another stage and second substages of one stage follow second substages of another stage.

While the Benes network has N waveguides, the Benes network may be used to perform switching or network applications for fewer inputs or outputs. For example, if it is desired to perform X to X switching or network applications of X optical signals where X is any integer over 3 or over 4 and X is not necessarily of the form $2^n$, the Benes network is formed to have $N=2^n$ waveguides but not all waveguides are used for the switching. In some examples the waveguides not used for switching may not contain optical elements or components such as beam splitters and phase shifters. Hence, optical elements may not be formed in the waveguides not used for switching. In addition or as an alternative, at least some waveguides not used for switching may not be fully formed or formed at all. When X is not of the form $2^n$, a Benes network having N waveguides wherein $N \geq X$ and N is given by $N=2^n$ is used and some waveguides may not be used for input or output of signals. In some examples of this case n is given by $\lceil \log_2 X \rceil$ wherein $\lceil . \rceil$ is the ceiling function. As well as performing X to X switching wherein X<N the Benes network may be used to perform X to Y switching wherein X is not necessarily equal to Y. In this scenario a Benes network of size N waveguides wherein $N \geq X$ and $N \geq Y$ can be used. In such a case, the choice of number of waveguides in the Benes network can be based on the greater of X or Y and can be chosen for the greater of X or Y as described above.

In the above example, the waveguides of the first and second plurality of waveguides can be configured to shift as defined above with respect to banyan-type network and Benes networks that only have waveguides interfacing between layers. Thus, for the banyan-type network when wherein n is 3 or greater then for each interaction stage given by k, wherein k is from 3 to n, either the first plurality of waveguides and/or the second plurality of waveguides are formed to displace laterally from the position of the waveguides in the first interaction stage by $2^{k-2}$ such that in the first substage of each interaction stage given by k wherein k is from 3 to n in unit increments the ith waveguide of the first plurality of waveguides is formed on the first substrate to be adjacent to a waveguide numbered $N/2+2^{k-2}+i$ of the second plurality of waveguides on the second substrate, wherein i is from 1 to $N/2-2^{k-2}$. Similarly, in the second substage of each interaction stage given by k wherein k is from 3 to n the ith waveguide of the first plurality of waveguides is formed on the first substrate to be adjacent to a waveguide numbered $N/2-2^{k-2}+i$ of the second plurality of waveguides on the second substrate, wherein i is from $1+2^{k-2}$ to N/2. In addition, for the Benes network when n is 4 or greater then for each interaction stage given by j, wherein j is from n+1 to 2n-3 in increments of 1, the relative alignment of the first plurality of waveguides and the second plurality of waveguides displaces laterally from the relative alignment of the first plurality of waveguides and the second plurality of waveguides in the first interaction stage by $2^{2n-j-2}$ such that in a first substage of each interaction stage given by j where j is from n+1 to 2n-3 in increments of 1 the ith waveguide of the first plurality of waveguides is formed on the first substrate to be adjacent to a waveguide numbered $N/2+2^{2n-j-2}+i$ of the second plurality of waveguides on the second substrate, wherein i is from 1 to $N/2-2^{2n-j-2}$. Similarly, in a second substage of each interaction stage given by j where j is from n+1 to 2n-3 in increments of 1 the ith waveguide of the first plurality of waveguides is formed on the first substrate to be adjacent to a waveguide numbered $N/2-2^{2n-j-2}+i$ of the second plurality of waveguides on the second substrate, wherein i is from $1+2^{2n-j-2}$ to N/2.

In other examples provided the waveguides that interface are aligned, not all waveguides need to be aligned provided the waveguides in each layer remain in the same order. Thus, not all waveguides need to shift at the same time provided the waveguides that interface are aligned. In addition, in some examples, provided the waveguides that interface are aligned some waveguides may shift left and some right during the same shifting stage. It is noted that the ordering of waveguides within a layer remains the same even if some waveguides shift left and some right.

While in the above examples, the waveguides that interface have been described using the index i any other suitable index can be used. For example, the index may be a, b, c, d, etc. provided the index is not used for any other value. In addition, while in the above examples the same index has been used to describe which waveguides interface different indexes could be used as required for clarity.

The above examples have described waveguides interfacing. The waveguides that interface, interface with each other in a pairwise fashion. In some examples, waveguides interface with each other in the pairwise fashion via binary switches. In other examples, the waveguides can interface with each other via beam splitters which can be variable beam splitters or 50/50 beam splitters. When variable beam splitters are used they can be formed from a Mach-Zehnder interferometer.

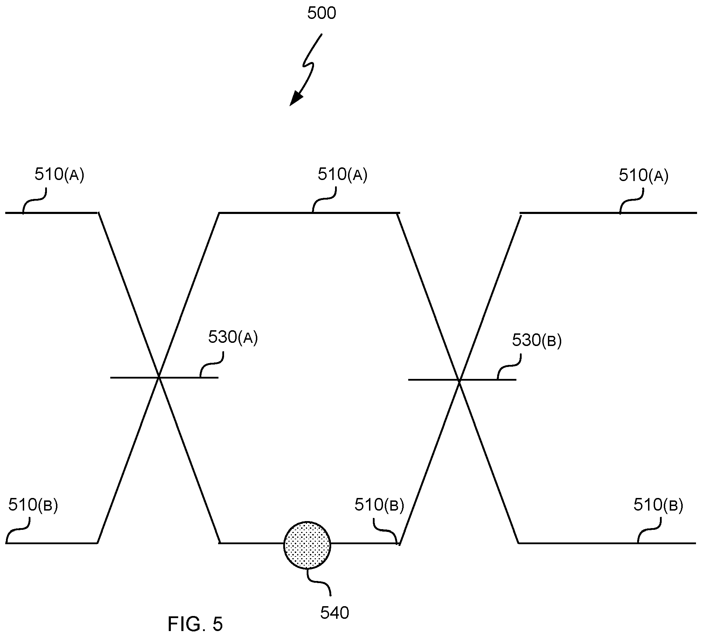

Figure 5 shows an example of a Mach-Zehnder interferometer used to form a variable beam splitter. The variable beam splitter 500 is being used as an interface between waveguides 510(a) and 510(b). The variable beam splitter 500 comprises a first 50/50 directional coupler 530a that couples the two waveguides 510(a) and 510(b) which are interfacing at the variable beam splitter 500. The 50/50 directional coupler may comprise a 50/50 beam splitter. The variable beam splitter 500 further comprises a second 50/50 directional coupler 530(b) wherein the second 50/50 directional coupler 530(b) also couples the two waveguides 510(a) and 510(b). The second 50/50 directional coupler 530(b) may be a 50/50 beam splitter. The first 50/50 directional coupler 530(a) and the second directional coupler 530(b) are spaced apart from each other. The variable beam splitter 500 further comprises a phase shifter 540 in either waveguide 510(a) or waveguide 510(b). In some examples, a phase shifter 540 is only present in one of waveguide 510(a) or waveguide 510(b). However, in other examples, a phase shifter 540 can be present in both waveguide 510(a) and waveguide 510(b). In further examples, a single waveguide 510(a) may comprise two phase shifters with a beam splitter between them. In such an example no phase shifters may be present in the other waveguide 510(b). In addition, while in some examples phase shifter 540 is a single phase shifter, in other examples phase shifter 540 can be formed of several phase shifters. The variable beam splitter 500 shown in Figure 5 provides an exemplary way of forming a variable beam splitter which enable the advantages of optical circuits using variable beam splitters to be obtained.

While the above has considered having waveguides interface using variable beam splitters, the skilled person would understand there are other ways for waveguides to interface in a pairwise fashion dependent upon the desired use of the banyan-type network or Benes network.

The above examples have described the forming of waveguides on substrates or layers. The waveguides can be formed on the substrates or layers using any suitable technique. In some examples, the waveguides can be formed on the first and second layers or substrates using lithography. In some examples, the first and second layers may be of the same substrate so the first and second substates are the same substrate. In other examples a first plurality of waveguides may be formed on a first substrate and a second plurality of waveguides may be formed on a second substrate that is different from the first substrate. The two substrates may then be joined by wafer-to-wafer bonding. Other suitable ways of forming waveguides on substrates are known and any suitable method can be used. In addition, other methods of joining substrates are known and any suitable method may be used.

In summary, in an example the present application describes an optical circuit comprising a first substrate or layer on which a first plurality of waveguides are formed and a second substrate or layer on which a second plurality of waveguides are formed. The waveguides are configured to interface with each other in pairwise fashion to implement a banyan-type network and/or a Benes network without the waveguides on a layer crossing other waveguides on that layer. In one example all interfacing is between layers reducing challenges involved in forming intra-layer interfacing in waveguides across multiple layers. In addition, this enables all active optical elements to be present in a single layer increasing ease of fabrication. In another example, inter-layer interfacing is used to reduce the amount of shifting required of waveguides.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1. An optical circuit comprising:

   a first substrate forming a first layer of the optical circuit, wherein a first plurality of waveguides are formed on the first layer; and
   a second substrate forming a second layer of the optical circuit, wherein a second plurality of waveguides are formed on the second layer; wherein
   the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a banyan-type network.

2. The optical circuit of claim 1, wherein:

   the first plurality of waveguides on the first layer are formed to remain in a same order throughout the banyan-type network such that no waveguide of the first plurality of waveguides crosses another waveguide of the first plurality of waveguides;
   the second plurality of waveguides on the second layer are formed to remain in a same order throughout the banyan-type network such that no waveguide of the second plurality of waveguides crosses another waveguide of the second plurality of waveguides; and
   a first at least one waveguide of the first plurality of waveguides on the first layer is formed to:

      interface with a second at least one waveguide of the second plurality of waveguides on the second layer at a first interaction stage;
      displace laterally with respect to the second at least one waveguide of the second plurality of waveguides to align with a third at least one waveguide of the second plurality of waveguides; and
      interface with the third at least one waveguide of the second plurality of waveguides on the second layer at a second interaction stage.

3. The optical circuit of claim 1 or claim 2, wherein:

   a total number of waveguides in the first plurality of waveguides and the second plurality of waveguides combined is N wherein N of the form $N=2^n$ wherein n is a positive integer greater than or equal to 2, and wherein the waveguides are numbered from 1 to N;
   the first plurality of waveguides are numbered from 1 to N/2;
   the second plurality of waveguides are numbered from N/2+1 to N; and
   the first plurality of waveguides on the first layer and the second plurality of waveguides on the second layer being formed such that at least some of the first plurality of waveguides on the first layer interface with at least some of the second plurality of waveguides on the second layer in a plurality of interaction stages in order to implement a banyan-type network comprises the first plurality of waveguides and the second plurality of waveguides being formed such that:

      at a first interaction stage a waveguide numbered i from the first plurality of waveguides is formed to interface with a waveguide numbered N/2+i from the second plurality of waveguides, wherein the interfacing is between layer and wherein i is from 1 to N/2;
      at a first substage of each interaction stage given by k, wherein k is from 2 to n in increments of 1, waveguides numbered i+r are formed to interface with waveguides numbered $(i + r + \frac{N}{2} + 2^{k-2}) \mathrm{mod} N$ wherein i is given by i=1+d×2^{k-1} wherein d is from 0 to $\frac{N}{2^k} - 1$ in increments of 1 and r is from 0 to $2^{k-2}$ - 1 in increments of 1; and
      at a second substage of interaction stage given by k, waveguides numbered i+r are formed to interface with waveguides numbered $(i + r + \frac{N}{2} + 2^{k-2}) \mathrm{mod} N$ wherein i is given by $i = 1 + d \times 2^{k-1}$ wherein d is from $\frac{N}{2^k}$ to $\frac{N}{2^{k-1}} - 1$ in increments of 1 and r is from 0 to $2^{k-2}$ - 1 in increments of 1.

4. The optical circuit of claim 3, wherein:

   at the first interaction stage a waveguide numbered i from the first plurality of waveguides is formed on the first layer adjacent to a waveguide numbered N/2+i from the second plurality of waveguides on the second layer wherein i is from 1 to N/2; and
   for each interaction stage given by k, wherein k is from 2 to n, a relative alignment of the first plurality of waveguides and the second plurality of waveguides is displaced laterally from a relative alignment of the first plurality of waveguides and the second plurality of waveguides in the first interaction stage by $2^{k-2}$ such that:

at the first substage of each of the interaction stages given by k the ith waveguide of the first plurality of waveguides is formed on the first layer to be adjacent to a waveguide numbered $N/2+2^{k-2}+i$ of the second plurality of waveguides on the second layer, wherein i is from 1 to $N/2-2^{k-2}$, wherein k is from 2 to n in increments of 1; and

at the second substage of each of the interactions stages given by k the ith waveguide of the first plurality of waveguides is formed on the first layer to be adjacent to a waveguide numbered $N/2-2^{k-2}+i$ of the second plurality of waveguides on the second layer, wherein i is from $1+2^{k-2}$ to $N/2$, wherein k is from 2 to n in increments of 1.

5. The optical circuit of claim 3 or claim 4, wherein n is 3 or greater and either:

at the $2^{nd}$ interaction stage the first substage is performed before the second substage and in subsequent interaction stages an order of implementing the substages alternates between performing the second substage before the first substage and performing the first substage before the second substage; or
at the $2^{nd}$ interaction stage the second substage is performed before the first substage and in subsequent interaction stage an order of implementing the substages alternates between performing the first substage before the second substage and performing the second substage before the first substage.

6. The optical circuit of any one of claims 3 to 5, wherein the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a Benes network by:

the first plurality of waveguides and the second plurality of waveguides being formed in accordance with the $1^{st}$ to $n^{th}$ interaction stages of the banyan-type network as defined in any one of claims 3 to 5; and
the first plurality of waveguides and the second plurality of waveguides then being formed such that:

at a first substage of each interaction stage given by j, wherein j is from n+1 to 2n-2 in increments of 1, waveguides numbered i+r are formed to interface with waveguides numbered $(i+r+\frac{N}{2}+2^{2n-j-2})\bmod N$ wherein i is given by $i=1+d\times 2^{n-j-1}$ wherein

d is from 0 to $\frac{N}{2^{2n-j}}-1$ in increments of 1 and r is from 0 to $2^{2n-j-2}$ - 1 in increments of 1; and

at a second substage of each interaction stage given by j, waveguides numbered i+r are formed to interface with waveguides numbered $(i+r+\frac{N}{2}+2^{2n-j-2})\bmod N$ wherein i is given by $i = 1 + d \times 2^{2n-j-1}$

wherein d is from $\frac{N}{2^{2n-j}}$ to $\frac{N}{2^{2n-j-1}}-1$ in increments of 1 and r is from 0 to $2^{2n-j-2}$ - 1 in increments of 1; and
at a (2n-1)th interaction stage a waveguide numbered i from the first plurality of waveguides is formed to interface with a waveguide numbered N/2+i from the second plurality of waveguides, wherein the interfacing is between layers of the optical circuit and wherein i is from 1 to N/2 in unit increments.

7. The optical circuit of claim 6, wherein for each interaction stage given by j, wherein j is from n+1 to 2n-2, a relative alignment of the first plurality of waveguides and the second plurality of waveguides is displaced laterally from a relative alignment of the first plurality of waveguides and the second plurality of waveguides in the first interaction stage by $2^{2n-j-2}$ such that:

at a first substage of each interaction stage given by j the ith waveguide of the first plurality of waveguides is formed on the first layer to be adjacent to a waveguide numbered $N/2+2^{2n-j-2}$ +i of the second plurality of waveguides on the second layer, wherein i is from 1 to $N/2-2^{2n-j-2}$;
at a second substage of each interaction stage given by j the ith waveguide of the first plurality of waveguides is formed on the first layer to be adjacent to a waveguide numbered $N/2-2^{2n-j-2}+i$ of the second plurality of waveguides on the second layer, wherein i is from $1+2^{2n-j-2}$ to N/2.

8. The optical circuit of any of claim 1 or claim 2, wherein:

a total number of waveguides in the first plurality of waveguides and the second plurality of waveguides combined is N wherein N is of the form $N=2^n$ wherein n is a positive integer greater than or equal to 2, and wherein the waveguides are numbered from 1 to N;
the first plurality of waveguides are numbered from 1 to N/2;

the second plurality of waveguides are numbered from N/2+1 to N; and

the first plurality of waveguides on the first layer and the second plurality of waveguides on the second layer being formed such that at least some of the first plurality of waveguides on the first layer interface with at least some of the second plurality of waveguides on the second layer in a plurality of interaction stages in order to implement a banyan-type network comprises the first plurality of waveguides and the second plurality of waveguides being formed such that:

at a first interaction stage a waveguide numbered i wherein i is from 1 to N-1 in units of 2 is formed to interface with a waveguide numbered i+1 wherein the interfacing is within a layer;

at a second interaction stage a waveguide numbered i from the first plurality of waveguides wherein i is from 1 to N/2 in units of 1 is formed to interface with a waveguide numbered N/2+i from the second plurality of waveguides, wherein the interfacing is between layers; and

if n is 3 or greater then at a first substage of each interaction stage given by k,

wherein k is from 3 to n in increments of 1, waveguides numbered i+r are formed to interface with waveguides numbered $(i + r + \frac{N}{2} + 2^{k-2}) \bmod N$ wherein i is given by i=1+d×2^{k-1} wherein d is from 0 to $\frac{N}{2^k} - 1$ in increments of 1 and r is from 0 to 2^{k-2} - 1 in increments of 1; and

at a second substage of each of interaction stage given by k, waveguides numbered i+r are formed to interface with waveguides numbered $(i + r + \frac{N}{2} + 2^{k-2}) \bmod N$ wherein i is given by i = 1 + $d \times 2^{k-1}$ wherein d is from $\frac{N}{2^k}$ to $\frac{N}{2^{k-1}} - 1$ in increments of 1 and r is from 0 to 2^{k-2} - 1 in increments of 1.

9. The optical circuit of claim 8, wherein n is 3 or greater and for each interaction stage given by k, wherein k is from 3 to n, either the first plurality of waveguides and/or the second plurality of waveguides are formed to displace laterally from the position of the waveguides in the first interaction stage by 2^{k-2} such that:

at the first substage of each interaction stage given by k the ith waveguide of the first plurality of waveguides is formed on the first layer to be adjacent to a waveguide numbered $\frac{N}{2} + 2^{k-2} + i$ of the second plurality of waveguides on the second layer, wherein i is from 1 to N/2-2^{k-2}; and

at the second substage of each interaction stage given by k the ith waveguide of the first plurality of waveguides is formed on the first layer to be adjacent to a waveguide numbered $\frac{N}{2} - 2^{k-2} + i$ of the second plurality of waveguides on the second layer, wherein i is from 1+2^{k-2} to N/2.

10. The optical circuit of claim 8 or claim 9, wherein:
the first plurality of waveguides on the first layer and the second plurality of waveguides on the second layer are formed such that at least some of the first plurality of waveguides on the first layer interface with at least some of the second plurality of waveguides on the second layer in a plurality of interaction stages in order to implement a Benes network by:

the first plurality of waveguides and the second plurality of waveguides being formed in accordance with the 1st to nth interaction stages of the banyan-type network as defined in any of claims 7 to 9; and

the first plurality of waveguides and the second plurality of waveguides then being formed such that:

at a (2n-2)th interaction stage a waveguide numbered i from the first plurality of waveguides is formed to interface with the waveguide numbered N/2+i from the second plurality of waveguides, wherein the interfacing is between layers of the optical circuit and wherein i is from 1 to N/2;

at a (2n-1)th interaction stage a waveguide numbered i wherein i is from 1 to N-1 in units of 2 are formed to interface with a waveguide numbered i+1 wherein the interfacing is within a layer; and

if n is 4 or greater then:

at a first substage of each interaction stage given by j, wherein j is from n+1 to 2n-3 in increments of 1, waveguides numbered i+r are formed to interface with waveguides numbered $(i + r + \frac{N}{2} + 2^{2n-j-2}) \bmod N$ wherein i is given by i=1+d×2^{2n-j-1} wherein d is from 0 to $\frac{N}{2^{2n-j}} - 1$ in increments of 1 and r is from 0 to $2^{2n-j-2}$ - 1 in increments of 1; and

at a second substage of each interaction stage given by j, waveguides numbered i+r are formed to interface with waveguides numbered

$(i + r + \frac{N}{2} + 2^{2n-j-2}) \mod N$ wherein i is given by i = 1 + $d \times 2^{2n-j-1}$ wherein d is from $\frac{N}{2^{2n-j}}$ to $\frac{N}{2^{2n-j-1}} - 1$ in increments of 1 and r is from 0 to $2^{2n-j-2}$ - 1 in increments of 1.

11. The optical circuit of claim 10 wherein n is 4 or greater and for each interaction stage given by j, wherein j is from n+1 to 2n-3 in increments of 1, either the first plurality of waveguides and/or the second plurality of waveguides are formed to displace laterally from the position of the waveguides in the first interaction stage by $2^{2n-j-2}$ such that:

at a first substage of each interaction stage given by j the ith waveguide of the first plurality of waveguides is formed on the first substrate to be adjacent to a waveguide numbered $N/2+2^{2n-j-2}+i$ of the second plurality of waveguides on the second substrate, wherein i is from 1 to $N/2-2^{2n-j-2}$;

at a second substage of each interaction stage given by j the ith waveguide of the first plurality of waveguides is formed on the first substrate to be adjacent to a waveguide numbered $N/2-2^{2n-j-2}+i$ of the second plurality of waveguides on the second substrate, wherein i is from $1+2^{2n-j-2}$ to N/2.

12. The optical circuit of any of claims 3 to 11, wherein at least one of:

at least one waveguide of the N waveguides has no input signal and/or at least one waveguide of the N waveguides has no output signal; or
the optical circuit is being used for X input to Y output network applications or switching wherein X is less than or equal to N and Y is less than or equal to N.

13. The optical circuit of any previous claim, wherein all active optical elements are on the first layer of the optical circuit.

14. The optical circuit of any previous claim wherein either:

the first substrate and the second substrate are the same substrate; or
the first substrate is a different substrate from the second substrate and the first substrate and the second substrate are joined using wafer-to-wafer bonding.

15. The optical circuit of any previous clam wherein the banyan-type network comprises at least one of a butterfly network, an omega network, a banyan network, a baseline network, an inverse butterfly network, an inverse omega network, an inverse banyan network or an inverse baseline network.

| 1 | 2 | 3 | 4 | 5 | 6 | 7 | 8 |

| 9 | 10 | 11 | 12 | 13 | 14 | 15 | 16 |

FIG. 1A

| 1 | 2 | 3 | 4 | 5 | 6 | 7 | 8 |

| 9 | 10 | 11 | 12 | 13 | 14 | 15 | 16 |

FIG. 1B

FIG. 1C

FIG. 1D

FIG. 2

STAGE 1

STAGE 2 FIRST SUBSTAGE

STAGE 2 SECOND SUBSTAGE

STAGE 3 SECOND SUBSTAGE

STAGE 3 FIRST SUBSTAGE

STAGE 4 FIRST SUBSTAGE

STAGE 4 SECOND SUBSTAGE

STAGE 5

FIG. 3

STAGE 1

STAGE 2

STAGE 3 FIRST SUBSTAGE

STAGE 3 SECOND SUBSTAGE

FIG. 4

EP 4 726 444 A1

FIG. 5

## EUROPEAN SEARCH REPORT

Application Number

EP 25 20 2879

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 568 560 B (UNIV ZHEJIANG) 15 June 2021 (2021-06-15) * paragraphs [0023], [0027] - [0028]; figures 2,3 * | 1-15 | INV. G02B6/12 |
| A | US 2020/241209 A1 (PARK JAEGYU [KR] ET AL) 30 July 2020 (2020-07-30) * paragraphs [0071] - [0074]; figures 1-4 * | 1-15 | |
| A | ADAM M. JONES ET AL: "Ultra-low crosstalk, CMOS compatible waveguide crossings for densely integrated photonic interconnection networks", OPTICS EXPRESS, vol. 21, no. 10, 9 May 2013 (2013-05-09), page 12002, XP055421087, DOI: 10.1364/OE.21.012002 * figure 1 * | 1-15 | |

TECHNICAL FIELDS SEARCHED (IPC)

G02B

The present search report has been drawn up for all claims

| Place of search | Date of completion of the search | Examiner |
|---|---|---|
| The Hague | 12 February 2026 | Pantelakis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2879

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| CN 110568560 | B | 15-06-2021 | NONE | | |
| US 2020241209 | A1 | 30-07-2020 | KR | 20200092123 A | 03-08-2020 |
| | | | US | 2020241209 A1 | 30-07-2020 |

EPO FORM P0459

For more details about this annex : see Official Journal of the European Patent Office, No. 12/82